# EUROPÄISCHE PATENTSCHRIFT

(11) **EP 1 604 437 B1**
(45) Veröffentlichungstag und Bekanntmachung des Hinweises auf die Patenterteilung: **13.12.2006**
(21) Anmeldenummer: 04713012.5
(22) Anmeldetag: 20.02.2004
(51) Int. Cl.: H02B 1/30, H02B 1/34

(54) **RAHMENGESTELL FÜR EINEN SCHALTSCHRANK**
FRAME FOR A SWITCHGEAR CABINET
BATI CON U POUR UNE ARMOIRE DE DISTRIBUTION

(30) Priorität: 11.03.2003 DE 10311375
(43) Veröffentlichungstag der Anmeldung: 14.12.2005
(73) Patentinhaber: Rittal GmbH & Co. KG, 35745 Herborn (DE)
(72) Erfinder: DAHMER, Ralf, 57462 Olpe (DE); HARTEL, Marc, 35447 Reiskirchen (DE); THIELMANN, Bodo, 35745 Herborn-Merkenbach (DE)
(74) Vertreter: Fleck, Hermann-Joseph
(86) Internationale Anmeldenummer: PCT/EP2004/001661
(87) Internationale Veröffentlichungsnummer: WO 2004/082087

(56) Entgegenhaltungen:
- WO-A-95/17803
- DE-C- 4 137 836
- GB-A- 2 295 078
- US-B2- 6 478 166

## Beschreibung

Die Erfindung betrifft ein Rahmengestell für einen Schaltschrank mit horizontalen und vertikalen Rahmenprofilen wobei, die vertikalen und horizontalen Rahmenprofile der Front- und Rückseite jeweils einen Vertikalrahmen bilden, wobei diese beiden Vertikalrahmen mittels eines Boden- und eines Dachelementes miteinander verbunden sind, wobei die Vertikalrahmen an abgekanteten Befestigungsrändern des Boden- und des Dachelementes in verschiedenen Abständen anbringbar sind, wobei die vertikalen Rahmenprofile einen in Richtung der Rahmengestell-Tiefe verlaufenden Basisschenkel aufweisen, an dem zwei Seitenschenkel abgekoppelt sind, wobei die Seitenschenkel im rechten Winkel zu dem Basisschenkel stehen, und wobei die Seitenschenkel und der Basisschenkel jeweils eine in Profillängsrichtung verlaufende Reihe von Befestigungsaufnahmen im Teilungsraster aufweist.

Ein derartiges Rahmengestell ist aus der WO 95/17803 bekannt. Die beiden Vertikalrahmen können an dem Boden- und Dachelement in verschiedenen Abständen zueinander befestigt werden, so dass das Rahmengestell für Einbauten auf verschiedene Einbautiefe gebracht werden kann. Die Vertikalrahmen stellen dabei Baueinheiten dar, die mit abgekanteten und mit Reihen von Befestigungsaufnahmen versehenen Rändern versehen sind.

Die horizontalen und vertikalen Rahmenprofile sind wie das Boden- und Dachelement mit gleichen Reihen von Befestigungsrahmen versehen, die vorzugsweise im einheitlichen Teilungsraster angeordnet sind. Dieses Teilungsraster ist auch auf das Teilungsraster der Befestigungsstellen der Einbauten abgestimmt.

Wie die US 6,478,166 B2 zeigt, sind auch Rahmengestelle bekannt, die zwei beabstandete Vertikalrahmen aufweisen, bei denen die vertikalen Rahmenprofile einen Basisschenkel und zwei abgekantete Seitenschenkel aufweisen. Die Seitenschenkel dieser vertikalen Rahmenprofile tragen unterschiedliche Befestigungsaufnahmen in unterschiedlichen Teilungsrastern.

Als Einbauten in ein Rahmengestell dieser Art werden mehr und mehr Baugruppenträger verwendet, in die Einzeleinschübe nebeneinander eingeschoben werden können. Die Einzeleinschübe haben verschiedene Breiten und Einbautiefen und sind darüberhinaus auf einem metrischen oder zöllischen System aufgebaut.

Es ist Aufgabe der Erfindung, ein Rahmengestell der eingangs erwähnten Art so zu gestalten, dass es mit einheitlichen Teilen sowohl für den Einbau von Einbauten eines metrischen und zöllischen Systems aufgebaut werden kann.

Diese Aufgabe wird nach der Erfindung dadurch gelöst, dass das Teilungsraster der beiden Seitenschenkel voneinander verschieden ist, wobei die beiden vertikalen Rahmenprofile mit den Befestigungsaufnahmen der ersten Seitenschenkel eine zöllische und mit den Befestigungsrahmen der zweiten Seitenschenkel eine metrische Befestigungsebene bilden, dass der Basisschenkel an seinem, dem ersten Seitenschenkel abgekehrten Ende in einen abgewinkelten Profilabschnitt übergeht, von dem eine Profilseite abgeht, die parallel zum Basisschenkel steht, dass an der Profilseite der zweite Seitenschenkel abgekantet ist und dass die Profilseite und der zweite Seitenschenkel mit einer Reihe von im gleichen Teilungsraster angeordneten Befestigungsrahmen versehen ist.

Mit dem variablen Abstand der beiden Vertikalrahmen läßt sich das Rahmengestell auf die Einbautiefe der Einbauten anpassen. Die Vertikalrahmen können mit dem ersten oder mit dem zweiten Seitenschenkel zur Frontseite gerichtet mit dem Boden- und Dachelement verbunden werden. Mit dieser einfachen Montageweise kann das Rahmengestell entweder für den Einbau von Einbauten auf metrischem oder zöllischem System ausgelegt werden. Ein besonders einfacher Gestellaufbau ergibt sich dann, wenn vorgesehen ist, dass die Vertikalrahmen mit den Basisschenkeln der vertikalen Rahmenprofile an den Innenseiten der Befestigungsränder von Boden- und Dachelement anliegen und mit diesen verbunden sind.

Die Verbindung der Vertikalrahmen mit dem Boden- und dem Dachelement ist nach einer Ausgestaltung so gelöst, dass die Vertikalrahmen mit den Basisschenkeln der vertikalen Rahmenprofile an den Innenseiten der Befestigungsränder von Boden- und Dachelement anliegen und mit diesen verbunden sind.

Ist nach einer Weiterbildung vorgesehen, dass die vertikalen Rahmenprofile und die horizontalen Rahmenprofile der Vertikalrahmen als Blech-Stanz-Biegeteile ausgebildet und mittels Schweißen zu den Vertikalrahmen verbunden sind, dann können die Vertikalrahmen preisgünstig hergestellt werden und stellen eine stabile, ausgerichtete Baueinheit dar, die schnell und einfach mit einem Boden- und einem Dachelement zu einem Rahmengestell zusammengebaut werden kann.

Das Boden- und das Dachelement ist nach einer weiteren Ausgestaltung als Verkleidungselement des Rahmengestelles ausgebildet und kann ebenfalls als Blech-Stanz-Biegeteil hergestellt werden. Das Boden- und das Dachelement übernehmen dabei eine weitere Funktion für den Schaltschrank und machen getrennte Boden- und Dachverkleidungen entbehrlich.

Die Erfindung wird anhand eines in den Zeichnungen dargestellten Ausführungsbeispiels näher erläutert. Es zeigen:
- Fig. 1: in perspektivischer Ansicht ein aus zwei Vertikalrahmen und einem Boden- und einem Dachelement zusammengebautes Rahmengestell,
- Fig. 2: die Ansicht auf eine Vertikalseite des Rahmengestelles,
- Fig. 3: die Ansicht auf die Frontseite des Rahmengestelles und
- Fig. 4: die Ansicht auf das Dachelement des Rahmengestelles.
- Fig. 5: im Querschnitt ein in den Vertikalrahmen gem. Fig. 1 oder 2 aufbaubares vertikales Rahmenprofil.

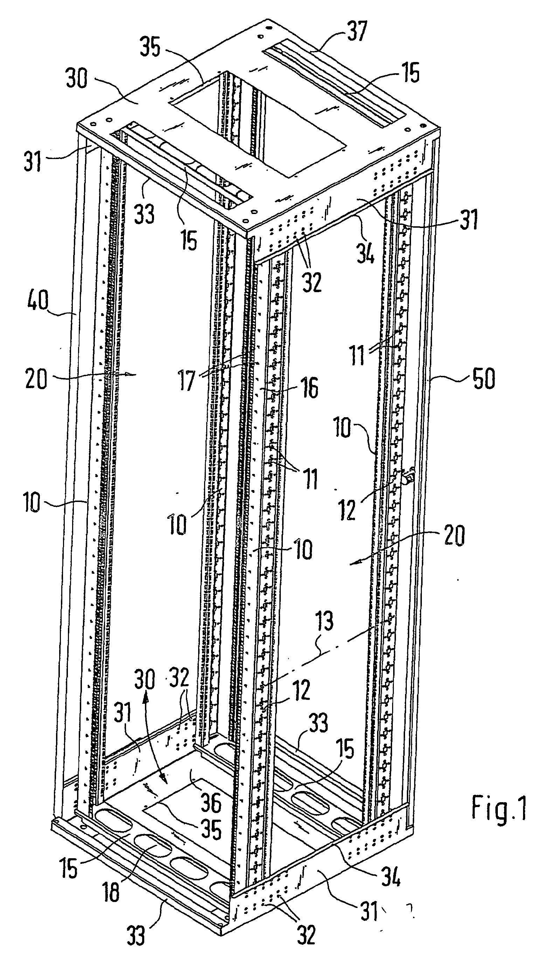

Wie Fig. 1 zeigt, bilden zwei vertikale Rahmenprofile 10 und zwei horizontale Rahmenprofile 15 einen Vertikalrahmen 20, wobei die Rahmenprofile 10 und 15 in den Eckbereichen miteinander verschweißt sind und eine stabile, ausgerichtete Baueinheit bilden. Dabei kann das vertikale Rahmenprofil 10 aus Basisschenkel 12 und zwei Seitenschenkeln 16 u-förmig ausgebildet sein, wobei der Basisschenkel 12 mindestens eine Reihe von Befestigungsaufnahmen 11 und die Seitenschenkel 16 mindestens eine Reihe von Befestigungsaufnahmen 17 tragen. Diese Befestigungsaufnahmen 11 und 17 können gleich oder verschieden ausgebildet und an die Einbaubedingungen angepasst sein. Auch die Form der Rahmenprofile 10 kann anders und auf die Einbaubedingungen abgestimmt sein.

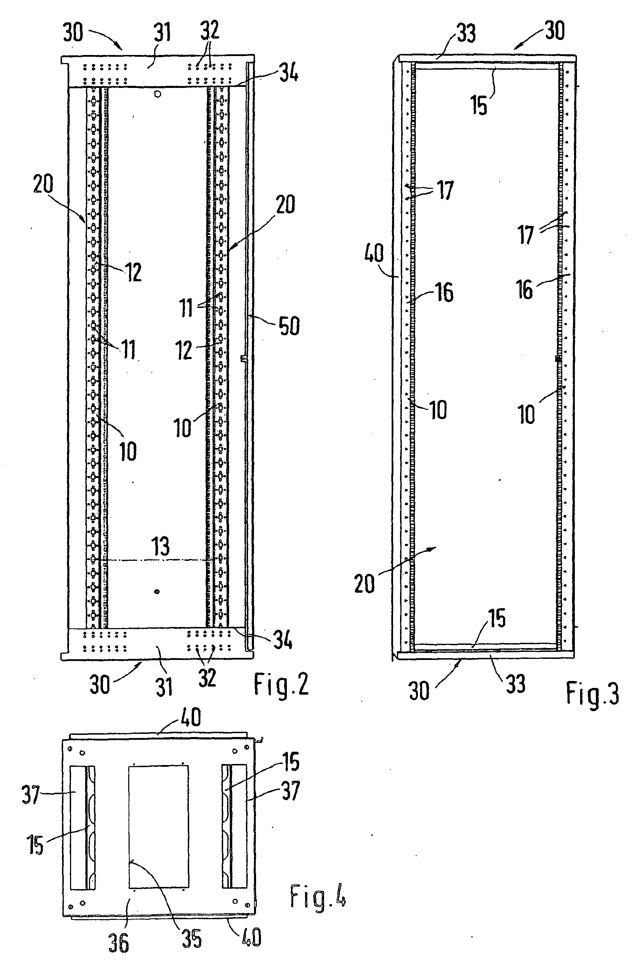

In den Fig. 2 und 3 ist beispielhaft ein solches u-förmiges vertikales Rahmenprofil 10 gezeigt. Es weist einen ersten Seitenschenkel 16 auf, der mit eine Reihe von in gleicher Teilung zueinander beabstandet angeordneten Befestigungsaufnahmen 17 ausgestattet ist. Dabei entspricht das Teilungsraster einem zöllischen Raster. Von dem Seitenschenkel 16 ist ein Basisschenkel 12 im rechten Winkel abgekantet. Dieser ist mit zwei Reihen von Befestigungsrahmen 11 im Teilungsraster ausgestattet. Von dem Basisschenkel 12 ist an dem den Seitenschenkel 16 abgewandten Ende ein Profilabschnitt abgebogen. Dieser steht parallel zum Seitenschenkel 16. Der Profilabschnitt geht in eine Profilseite über, die parallel zum Basisschenkel 12 steht. Von der Profilseite wiederum geht dann im rechten Winkel unter Bildung einer Innenkante ein zweiter Seitenschenkel 16 ab. Der zweite Seitenschenkel 16 und die Profilseite weisen jeweils eine Reihe von im metrischen Teilungsraster eingebrachte Befestigungsaufnahmen auf. Diese sind identisch ausgebildet und alle im gleichen horizontalen Abstand von der lnnenkante angeordnet.

Im eingebauten Zustand stehen die Profilseiten 16 parallel zur Front- bzw. Rückseite des Rahmengestelles. Der Basisschenkel 12 steht parallel und ist zur Außenseite des Rahmengestelles gewandt. Die Innenkante weist dabei in den vom Rahmengestell umgebenen Innenraum. Die ersten Seitenschenkel 16 (Zollteilung) der vertikalen Rahmenprofile 10 eines Vertikalrahmens 20 sind gegeneinander gekehrt und im 19" Bauabstand zueinander beabstandet. Die Profilseiten und die zweiten Seitenschenkel 16 der vertikalen Rahmenprofile 10 der Vertikalrahmen 20 bilden ein metrisches Einbaumaß. Dabei können an den zweiten Seitenschenkeln 16 Einbauten in Richtung der Rahmengestellbreite und an den Profilseiten 16 Einbauten in Richtung der Rahmengestelltiefe zwischen und an den beiden Vertikalrahmen (20) befestigt werden.

Die beiden Vertikalrahmen 20 bilden die Frontseite und die Rückseite des Rahmengestelles. Wenn die Vertikalrahmen 20 zu ihren vertikalen Mittelebenen symmetrisch sind, dann können sie in jeder Stellung für die beiden Seiten des Rahmengestelles verwendet werden. Es ist daher nur ein identisches Bauteil für beide Vertikalrahmen erforderlich.

Bei Verwendung der in Fig. 4 gezeigten vertikalen Rahmenprofile 10 können ebenfalls identisch vertikal Rahmen ausgebildet werden. Diese müssen dann um 180° verdreht eingebaut werden.

Die beiden Vertikalrahmen 20 werden mit einem Boden- und einem Dachelement 30 miteinander verbunden, die, wie das Bezugszeichen 30 schon zeigt, ebenfalls identisch ausgebildet sind. Dieses Bauteil ist als einfaches Blech-Stanz-Biegeteil ausgebildet und hergestellt und kann für den Boden- und den Dachbereich des Schaltschrankes getrennte Verkleidungselemente überflüssig machen. Den beiden Vertikalseiten des Rahmengestelles zugekehrt tragen das Boden- und das Dachelement 30 abgekantete Befestigungsränder 31 mit mindestens einer Reihe von Befestigungsaufnahmen 32 oder in Tiefenrichtung sich erstreckende Langlöcher, so dass die Vertikalrahmen 20 mit den Basisschenkeln 12 der vertikalen Rahmenprofile 10 an den Innenseiten der Befestigungsränder 31 anliegen und mit diesen verbunden werden können, wie Fig. 2 zeigt. Dabei kann der Abstand 13, d.h. die Einbautiefe, an die gewünschte Einbaubedingung angepasst weden. Die Rückseite des Rahmengestelles kann mit einer Rückwand 50 verschlossen werden.

Wie die Fig. 1 und 2 zeigen, kann die freie Kante des Befestigungsrandes 31 nach außen abgekantet sein. Diese Abkantung 34 kann zum Anbringen von Seitenwänden 40 verwendet werden.

Das Boden- und das Dachelement 30 sind identisch ausgebildet und zu der Mittelebene, die parallel zu den Befestigungsrändern 31 verläuft, symmetrisch ausgebildet. Im Bereich der horizontalen Rahmenprofile 15 sind Aussparungen 37 in der die Befestigungsränder verbundenen Platte 36 eingebracht, die wie die Durchbrüche 18 in den Rahmenprofilen 15 für die Einführung von Kabeln und dergleichen verwendet werden können. Die Platte 36 kann auch einen zentrischen Durchbruch 35 aufweisen, wie die Ansicht nach Fig. 4 deutlich erkennen lässt.

Im Bereich der Frontseite des Rahmengestelles sind die Seitenschenkel 16 mit den Befestigungsaufnahmen 17 des frontseitigen Vertikalrahmens 20 zugänglich, die z.B. auf das 19"-Einbaumaß von Einbauten abgestimmt sind, wie Fig. 3 zeigt. Das Boden- und das Deckelement 30 schließen die Frontseite mit Abkantungen 33 ab, die für die Anlenkung und den Verschluss einer Schranktüre verwendet werden können.

## Patentansprüche

1. Rahmengestell für einen Schaltschrank mit horizontalen und vertikalen Rahmenprofilen (10,15) wobei, die vertikalen und horizontalen Rahmenprofile (10,15) der Front- und Rückseite jeweils einen Vertikalrahmen (20) bilden, wobei diese beiden Vertikalrahmen (20) mittels eines Boden- und eines Dachelementes (30) miteinander verbunden sind, wobei die Vertikalrahmen (20) an abgekanteten Befestigungsrändern (31) des Boden- und des Dachelementes (30) in verschiedenen Abständen anbringbar sind, wobei die vertikalen Rahmenprofile (10) einen in Richtung der Rahmengestell-Tiefe verlaufenden Basisschenkel (12) aufweisen, an dem zwei Seitenschenkel (16) abgekoppelt sind, wobei die Seitenschenkel (16) im rechten Winkel zu dem Basisschenkel (12) stehen, und wobei die Seitenschenkel (16) und der Basisschenkel (12) jeweils eine in Profillängsrichtung verlaufende Reihe von Befestigungsaufnahmen (17) im Teilungsraster aufweist,
**dadurch gekennzeichnet,**
**dass** das Teilungsraster der beiden Seitenschenkel (16) voneinander verschieden ist,
wobei die beiden vertikalen Rahmenprofile (10) mit den Befestigungsaufnahmen (17) der ersten Seitenschenkel (16) eine zöllische und mit den Befestigungsaufnahmen (17) der zweiten Seitenschenkel (16) eine metrische Befestigungsebene bilden,
**dass** der Basisschenkel (12) an seinem, dem ersten Seitenschenkel (16) abgekehrten Ende in einen abgewinkelten Profilabschnitt übergeht, von dem eine Profilseite abgeht, die parallel zum Basisschenkel (12) steht,
**dass** von der Profilseite der zweite Seitenschenkel (16) abgekantet ist und
**dass** die Profilseite und der zweite Seitenschenkel (16) mit einer Reihe von im gleichen Teilungsraster angeordneten Befestigungsrahmen versehen ist.

2. Rahmengestell nach Anspruch 1,
**dadurch gekennzeichnet,**
**dass** die Vertikalrahmen (20) mit den Basisschenkeln (12) der vertikalen Rahmenprofile (20) an den Innenseiten der Befestigungsränder (31) von Boden- und Dachelement (30) anliegen und mit diesen verbunden sind.

3. Rahmengestell nach Anspruch 1 oder 2,
**dadurch gekennzeichnet,**
**dass** die horizontalen Rahmenprofile (15) mit Kabeleinführungs-Durchbrüchen (18) versehen sind und
**dass** das Boden- und das Dachelement (30) im Bereich der horizontalen Rahmenprofile (15) der Vertikalrahmen (20) mit Aussparungen (37) versehen sind.

4. Rahmengestell nach einem der Ansprüche 1 bis 3,
**dadurch gekennzeichnet,**
**dass** die Vertikalrahmen (20) identisch ausgebildet sind.

5. Rahmengestell nach einem der Ansprüche 1 bis 4,
**dadurch gekennzeichnet,**
**dass** das Boden- und das Dachelement (30) identisch und zu der parallel zu den Befestigungsrändern (31) verlaufenden Mittelebene symmetrisch ausgebildet sind.

6. Rahmengestell nach einem der Ansprüche 1 bis 5,
**dadurch gekennzeichnet,**
**dass** die vertikalen Rahmenprofile (10) und die horizontalen Rahmenprofile (15) der Vertikalrahmen (20) als Blech-Stanz-Biegeteile ausgebildet und mittels Schweißen zu den Vertikalrahmen (20) verbunden sind.

7. Rahmengestell nach einem der Ansprüche 1 bis 6,
**dadurch gekennzeichnet,**
**dass** das Boden- und das Dachelement (30) als Verkleidungselement des Rahmengestelles ausgebildet und als Blech-Stanz-Biegeteil hergestellt sind.

## Claims

1. Rack for a switchgear cabinet having horizontal and vertical frame profiles (10, 15), wherein the vertical and horizontal frame profiles (10, 15) of the front and rear side respectively form a vertical frame (20), wherein these two vertical frames (20) are mutually connected by means of a floor and a roof element (30), wherein the vertical frames (20) can be attached to folded fastening edges (31) of the floor and roof elements (30) at different distances apart, wherein the vertical frame profiles (10) have a base member (12), running in the direction of the rack depth, to which two side members (16) are coupled, wherein the side members (16) stand at a right angle to the base member (12), and wherein the side members (16) and the base member (12) respectively have in the dividing screen a row of fastening fixtures (17) running in the longitudinal direction of the profile,
**characterized**
**in that** the dividing screens of the two side members (16) are different from one another,
the two vertical frame profiles (10) forming with the fastening fixtures (17) of the first side members (16) an imperial and with the fastening fixtures (17) of the second side members (16) a metric fastening plane,
**in that** the base member (12), at its end facing away from the first side member (16), merges into an angled-off profile section, from which emanates a profile side standing parallel to the base member (12),
**in that** the second side member (16) is folded on the profile side,
**in that** the profile side and the second side member (16) are provided with a row of fastening frames disposed in the same dividing screen.

2. Rack according to Claim 1,
**characterized**
**in that** the vertical frames (20) bear with the base members (12) of the vertical frame profiles (10) against the inner sides of the fastening edges (31) of the floor and roof elements (30) and are connected to these.

3. Rack according to Claim 1 or 2,
**characterized**
**in that** the horizontal frame profiles (15) are provided with cable lead-in apertures (18) and
**in that**, in the region of the horizontal frame profiles (15) of the vertical frames (20), the floor and roof elements (30) are provided with cutouts (37).

4. Rack according to one of Claims 1 to 3,
**characterized**
**in that** the vertical frames (20) are identically configured.

5. Rack according to one of Claims 1 to 4,
**characterized**
**in that** the floor and roof elements (30) are identical and are configured symmetrically to the middle plane running parallel to the fastening edges (31).

6. Rack according to one of Claims 1 to 5,
**characterized**
**in that** the vertical frame profiles (10) and the horizontal frame profiles (15) of the vertical frames (20) are configured as bent sheet-metal stampings and are connected to the vertical frames. (20) by means of welding.

7. Rack according to one of Claims 1 to 6,
**characterized**
**in that** the floor and roof elements (30) are configured as a cladding element of the rack and are produced as a bent sheet-metal stamping.

## Revendications

1. Bâti pour une armoire de distribution avec des profilés de cadre horizontaux et verticaux (10, 15) dans lequel les profilés de cadre horizontaux et verticaux (10, 15) des faces avant et arrière forment respectivement un cadre vertical (20), dans lequel ces deux cadres verticaux (20) sont assemblés l'un à l'autre au moyen d'un élément de fond et d'un élément de toit (30), dans lequel les cadres verticaux (20) peuvent être placés à des distances différentes sur des bords de fixation repliés (31) de l'élément de fond et de l'élément de toit (30), dans lequel les profilés de cadre verticaux (10) présentent une aile de base (12) orientée dans la direction de la profondeur du bâti, à laquelle sont couplées deux ailes latérales (16), dans lequel les ailes latérales (16) sont placées à angle droit par rapport à l'aile de base (12), et dans lequel les ailes latérales (16) et l'aile de base (12) présentent chacune une série de logements de fixation (17) orientée en direction longitudinale avec un pas de division, **caractérisé en ce que** les pas de division des deux ailes latérales (16) sont différents l'un de l'autre, dans lequel les deux profilés de cadre verticaux (10) forment un plan de fixation anglais (en pouces) avec les logements de fixation (17) de la première aile latérale (16) et un plan de fixation métrique avec les logements de fixation (17) de la deuxième aile latérale (16), **en ce que** l'aile de base (12) se transforme, à son extrémité située à l'opposé de la première aile latérale (16), en un segment de profilé coudé d'où part un côté de profilé qui est parallèle à l'aile de base (12), **en ce que** la deuxième aile latérale (16) est coudée à partir du côté de profilé et **en ce que** le côté de profilé et la deuxième aile latérale (16) est pourvu d'une série de logements de fixation disposés avec le même pas de division.

2. Bâti selon la revendication 1, **caractérisé en ce que** les cadres verticaux (20) s'appliquent avec les ailes de base (12) des profilés de cadre verticaux (10) sur les faces intérieures des bords de fixation (31) de l'élément de fond et de l'élément de toit (30) et sont assemblés à ceux-ci.

3. Bâti selon la revendication 1 ou 2, **caractérisé en ce que** les profilés de cadre horizontaux (15) sont pourvus de passages d'introduction de câbles (18) et **en ce que** l'élément de fond et l'élément de toit (30) sont pourvus d'évidements (37) dans la région des profilés de cadre horizontaux (15) des cadres verticaux (20).

4. Bâti selon l'une quelconque des revendications 1 à 3, **caractérisé en ce que** les cadres verticaux (20) sont identiques.

5. Bâti selon l'une quelconque des revendications 1 à 4, **caractérisé en ce que** l'élément de fond et l'élément de toit (30) sont identiques et sont symétriques par rapport au plan médian parallèle aux bords de fixation (31).

6. Bâti selon l'une quelconque des revendications 1 à 5, **caractérisé en ce que** les profilés de cadre verticaux (10) et les profilés de cadre horizontaux (15) des cadres verticaux (20) sont des pièces de tôle formées à la presse et sont assemblés par soudage aux cadres verticaux (20).

7. Bâti selon l'une quelconque des revendications 1 à 6, **caractérisé en ce que** l'élément de fond et l'élément de toit (30) sont réalisés comme éléments d'habillage du bâti et sont des pièces de tôle formées à la presse.
